# EUROPÄISCHE PATENTSCHRIFT

(11) **EP 2 810 764 B1**
(45) Veröffentlichungstag und Bekanntmachung des Hinweises auf die Patenterteilung: **09.08.2017**
(21) Anmeldenummer: 13170552.7
(22) Anmeldetag: 05.06.2013
(51) Int. Cl.: B29C 51/26, B29C 65/02, B29D 22/00, B29C 65/78, B29C 51/10, B29K 23/00, B29C 69/00

(54) **Verfahren zur Herstellung eines Kunststoffbehälters**
Method for producing a plastic container
Procédé de fabrication d'un récipient en matière plastique

(43) Veröffentlichungstag der Anmeldung: 10.12.2014
(73) Patentinhaber: Magna Steyr Fuel Systems GesmbH, 8261 Sinabelkirchen (AT)
(72) Erfinder: Egger, Maris, 8311 Markt Hartmannsdorf (AT); Farmer, Manuel, 8410 Weitendorf (AT); Mayrhofer, Michael, 8212 Pischelsdorf (AT); Urdl, Christian, 8103 Eisbach (AT)
(74) Vertreter: Zangger, Bernd

(56) Entgegenhaltungen:
- EP-A2- 2 141 000
- EP-A2- 2 497 622
- DE-A1-102011 015 049
- FR-A1- 2 879 122
- US-A- 4 952 347
- US-B1- 6 338 420

## Beschreibung

### Gebiet der Erfindung

Die vorliegende Erfindung betrifft ein Verfahren zur Herstellung eines Kunststoffbehälters aus einer ersten Kunststoffhalbschale und einer zweiten Kunststoffhalbschale, mit einem an der ersten Kunststoffhalbschale dauerhaft befestigten ersten Anbauteil, gemäß dem Oberbegriff des Anspruchs 1.

### Stand der Technik

Derartige Kunststoffbehälter werden insbesondere als Kraftstofftanks für Kraftfahrzeuge eingesetzt. Ein bekanntes Herstellungsverfahren für derartige Kunststoffbehälter umfasst die Herstellung von ersten, beispielsweise unteren und zweiten, beispielsweise oberen Kunststoffhalbschalen durch Thermoformen, sowie das anschließende Verschweißen der beiden erhitzten Kunststoffhalbschalen an ihren Rändern zu einem geschlossenen Behälter.

Bei der Herstellung derartiger Kunststoffbehälter ist es auch bekannt, Anbauteile wie etwa Kraftstoffpumpen und Hebelgeber bereits vor dem Verschweißen der Kunststoffhalbschalen in den jeweiligen Kunststoffhalbschalen zu befestigen. Die Anmeldung FR 2 879 122 A1 ist ein Beispiel dieser Praxis. Je nach Anwendung des Kunststoffbehälters und der Anbauteile ist es manchmal erforderlich, dass bestimmte Anbauteile an einer bestimmten der beiden Kunststoffhalbschalen befestigt werden müssen, beispielsweise damit ein Hebelgeber bodenreferenziert in einem Kraftstoffbehälter angeordnet ist.

### Zusammenfassung der Erfindung

Es ist eine Aufgabe der Erfindung, ein Verfahren zur Herstellung eines Kunststoffbehälters aus einer ersten Kunststoffhalbschale und einer zweiten Kunststoffhalbschale, mit einem an der ersten Kunststoffhalbschale dauerhaft befestigten ersten Anbauteil anzugeben, dass kostengünstig und effizient ist.

Die Lösung der Aufgabe erfolgt durch ein Verfahren zur Herstellung eines Kunststoffbehälters gemäß dem Anspruch 1. Dadurch dass das Anbauteil erfindungsgemäß zumindest eine Strebe aufweist, deren Ende zur gegenüberliegenden Kunststoffhalbschale reicht, ist es möglich ein Anbauteil, das an einer bestimmten der beiden Kunststoffhalbschalen befestigt werden muss, zunächst - beispielsweise nur temporär - an der anderen Kunststoffhalbschale festzulegen, um erst bei der Verschweißung der beiden Kunststoffhalbschalen auch das Anbauteil über dessen Strebe an der "richtigen" Kunststoffhalbschale dauerhaft zu befestigen.

Je nach sonstigen Gegebenheiten im Herstellungsverfahren kann es wesentlich effizienter und kostengünstiger sein, ein Anbauteil nicht an der erforderlichen, ersten, Kunststoffhalbschale zu befestigen, sondern, beispielsweise temporär, an der anderen, zweiten, Kunststoffhalbschale und die erforderliche Verbindung des Anbauteiles mit der ersten Kunststoffhalbschale erst im Zuge der Verschweißung der Halbschalen miteinander, als Zusatznutzen und praktisch ohne weiteren Aufwand zu bewirken.

Das zumindest zeitweilige Befestigen des Anbauteiles an der zweiten Kunststoffhalbschale kann beispielsweise durch Einclipsen, Kleben, Schrauben oder Verschweißen erfolgen.

Selbstverständlich kann erfindungsgemäß vorgesehen sein, dass ein Anbauteil auch zwei oder mehr derart ausgebildete Streben aufweist, die zunächst an der zweiten Kunststoffhalbschale, letztlich jedoch an der ersten Kunststoffhalbschale befestigt werden.

Weiterbildungen der Erfindung sind in den abhängigen Ansprüchen, der Beschreibung sowie den beigefügten Zeichnungen angegeben.

Die erste Kunststoffhalbschale und die zweite Kunststoffhalbschale können bevorzugt durch Erwärmen und Thermoformen geformt werden.

Das Anbauteil ist eine Kraftstoffpumpe, ein Fördermodul oder ein Hebelgeber. Bevorzugt werden die erste Kunststoffhalbschale und die zweiten Kunststoffhalbschale an deren umlaufenden Rändern verschweißt, insbesondere thermoplastisch verschweißt.

Besonders bevorzugt wird die Strebe mit der ersten Kunststoffhalbschale thermoplastisch verschweißt.

Bevorzugt bestehen die Strebe und die erste Kunststoffhalbschale aus dem selben Material, insbesondere aus HDPE (High Density Polyethylen).

Gemäß einer Ausführungsform der Erfindung wird ein zweites Anbauteil an der zweiten Kunststoffhalbschale dauerhaft befestigt. In diesem Fall gibt es zusätzlich zum Anbauteil das an der ersten Kunststoffhalbschale befestigt werden soll, ein zweites Anbauteil, das an der anderen der beiden Halbschalen befestigt werden soll. Durch die erfindungsgemäße Verwendung einer Strebe ist es möglich, beide Anbauteile zunächst an der selben Kunststoffhalbschale zu bestücken.

Besonders bevorzugt werden das erste Anbauteil und das zweite Anbauteil mit dem selben Greifwerkzeug an der zweiten Kunststoffhalbschale befestigt. Da beide Anbauteile erfindungsgemäß an der selben Halbschale bestückt werden, ist auch die effiziente Verwendung des selben Greifwerkzeuges leicht möglich.

Bevorzugt weist die Strebe eine Sollbruchstelle auf, die so ausgelegt ist, dass die Strebe des Kunststoffbehälters an der Sollbruchstelle bricht, bevor die Kunststoffhalbschalen beschädigt werden, um eine Beschädigung des Kunststoffbehälters bei ungewöhnlichen Belastungen zu vermeiden.

Die Sollbruchstelle kann bevorzugt so ausgelegt sein, dass ein Sitz des ersten Anbauteils an der ersten Kunststoffhalbschale auch dann erhalten bleibt, wenn die Strebe an der Sollbruchstelle bricht.

### Kurzbeschreibung der Zeichnungen

Die Erfindung wird im Folgenden beispielhaft unter Bezugnahme auf die Zeichnungen beschrieben.
- Fig. 1 bis 4: zeigen Verfahrensschritte zur Herstellung eines Kunststoffbehälters mit einem Anbauteil gemäß dem Stand der Technik.
- Fig. 5: zeigt schematisch einen erfindungsgemäß hergestellten Kunststoffbehälter.
- Fig. 6 und 7: zeigen Schnittdarstellungen einer Strebe eines erfindungsgemäß hergestellten Kunststoffbehälters.
- Fig. 8 und 9: zeigen Teildarstellungen der Kontaktbereiche A und B aus der Fig. 7.

### Detaillierte Beschreibung der Erfindung

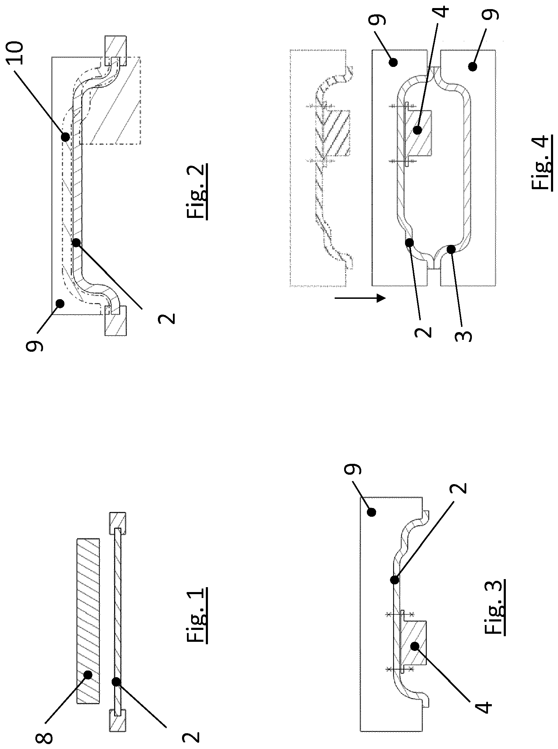

In den Fig. 1-4 sind Verfahrensschritte zur Herstellung eines Kunststoffbehälters mit einem Anbauteil dargestellt, wie sie aus dem Stand der Technik bereits bekannt sind.

In einem ersten Schritt (Fig. 1) wird eine Kunststoffplatte, die als erste Kunststoffhalbschale 2 verwendet wird, durch ein Heizelement 8 erwärmt.

Diese Erwärmung kann in zwei separaten Werkzeughälften, einmal für ein oberes Umformteil und einmal für ein unteres Umformteil erfolgen, wobei in Fig. 1 lediglich eine der beiden Werkzeughälften dargestellt ist.

Wie in Fig. 2 dargestellt, erlangt die temperierte erste Kunststoffhalbschale 2 durch die Werkzeugkontur 10 des Werkzeuges 9 eine gewünschte Form, beispielsweise durch Anwendung eines Vakuums.

Die geformte Kunststoffhalbschale 2 wird schließlich (Fig. 3) mit einem Anbauteil 4 bestückt, beispielsweise durch Anschrauben oder Verkleben.

Daraufhin werden eine obere und eine untere Kunststoffhalbschale 2,3 aneinander gepresst und so an deren Rändern, die zu Schweißnähten werden, verschweißt. In der Darstellung der Fig. 4 wird die oben befindliche Werkzeughälfte mit der ersten Kunststoffhalbschale 2 in Pfeilrichtung auf die untere Werkzeughälfte mit der zweiten Kunststoffhalbschale 3 gepresst.

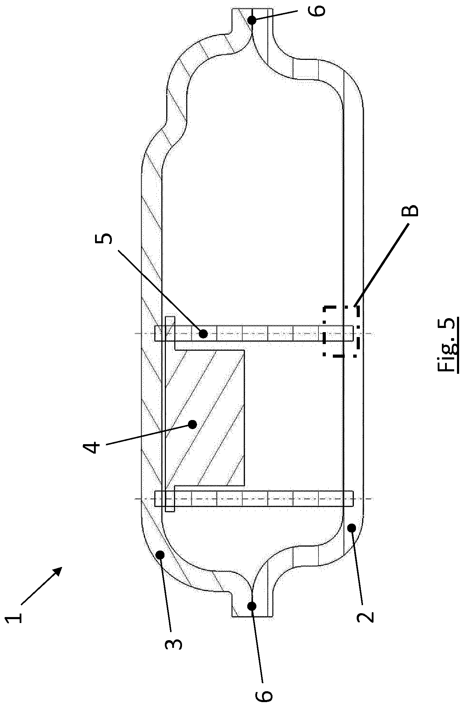

Fig. 5 zeigt einen erfindungsgemäß hergestellten Kunststoffbehälter 1, der sich von einem Kunststoffbehälter aus dem Stand der Technik dadurch unterscheidet, dass der Anbauteil 4 zumindest eine, in der gezeigten Ausführung zwei Streben 5 aufweist, die an der zweiten Kunststoffhalbschale 3 (in dieser Darstellung oben im Bild) vorfixiert sind, beispielsweise durch Einclipsen, Einschweißen oder ähnlichem, die jedoch auch bis zur ersten Kunststoffhalbschale 2 (unten in Fig.5) reichen und dort, im Kontaktbereich B, im Zuge der Verschweißung der beiden Halbschalen mit der ersten Kunststoffhalbschale 2 thermoplastisch verschweißt werden. Hierdurch ist es möglich bei der Herstellung des Behälters einen Anbauteil der in der ersten bzw. zweiten Kunststoffhalbschale fixiert werden soll, in der zweiten bzw. ersten Kunststoffhalbschale einzulegen.

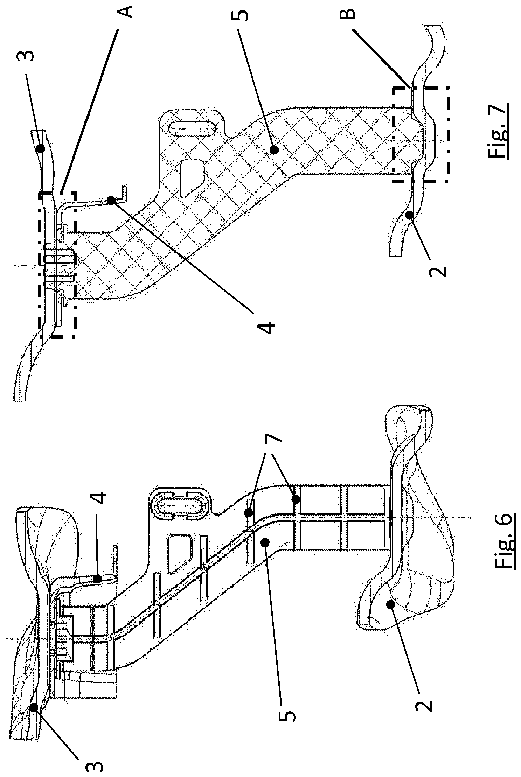

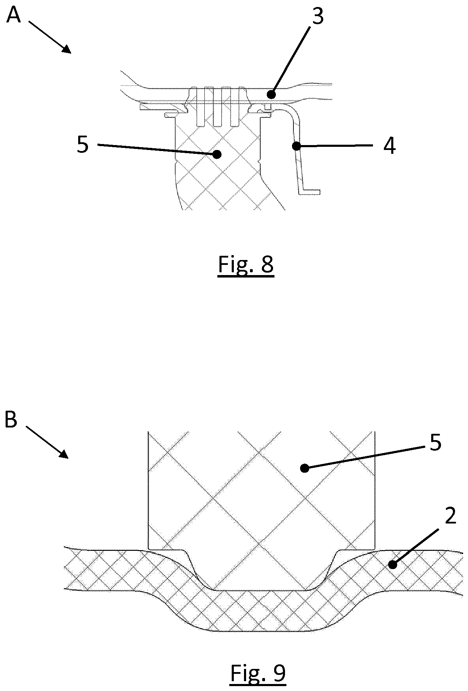

Fig. 6 und 7 zeigen eine Strebe 5 an einem Fördermodul als Anbauteil 4 eines erfindungsgemäß hergestellten Kunststoffbehälters 1 entsprechend Fig. 5 im Detail. Die Strebe 5 weist Sollbruchstellen 7, zum Schutz der Kunststoffhalbschalen 2, 3 bei Belastungen auf. Der Kontaktbereich A, in welchem die Strebe 5 an der zweiten Kunststoffhalbschale 3 zumindest temporär fixiert ist, ist in Fig. 8 näher dargestellt. Der Kontaktbereich B, in welchem die Strebe 5 an der ersten Kunststoffhalbschale 2 verschweißt ist, ist in Fig. 9 näher dargestellt.

Durch das erfindungsgemäße Verwenden von Streben an Anbauteilen ist es möglich Anbauteile die im ersten Umformteil (erste Kunststoffhalbschale) angeschweißt werden müssen im zweiten Umformteil (zweite Kunststoffhalbschale) anzuschweißen und umgekehrt. Insbesondere können Anbauteile am ersten und am zweiten Umformteil mit nur einem Greifer in den Umformteilen bestückt werden. Das erfindungsgemäße Verfahren zur Herstellung eines Kunststoffbehälters aus einer ersten Kunststoffhalbschale und einer zweiten Kunststoffhalbschale, mit einem an der ersten Kunststoffhalbschale dauerhaft befestigten ersten Anbauteil, ist daher effizient und kostengünstig.

### Bezugszeichenliste

- 1: Kunststoffbehälter
- 2: erste Kunststoffhalbschale
- 3: zweite Kunststoffhalbschale
- 4: Anbauteil
- 5: Strebe
- 6: umlaufende Ränder
- 7: Sollbruchstelle
- 8: Heizelement
- 9: Werkzeug
- 10: Werkzeugkontur

- A: Kontaktbereich
- B: Kontaktbereich

## Patentansprüche

1. Verfahren zur Herstellung eines Kunststoffbehälters (1) aus einer ersten Kunststoffhalbschale (2) und einer zweiten Kunststoffhalbschale (3), mit einem an der ersten Kunststoffhalbschale (2) dauerhaft befestigten ersten Anbauteil (4), wobei
- die erste Kunststoffhalbschale (2) und die zweite Kunststoffhalbschale (3) geformt werden,
- das erste Anbauteil (4) an der zweiten Kunststoffhalbschale (3) zumindest zeitweilig befestigt wird, wobei das erste Anbauteil (4) eine Strebe (5) aufweist, wobei die Strebe (5) so ausgebildet ist, dass ein Ende der Strebe (5) in einem Kontaktbereich (B) liegt, der zum Kontakt mit der ersten Kunststoffhalbschale (2) vorgesehen ist,
- die erste Kunststoffhalbschale (2) mit der zweiten Kunststoffhalbschale (3) verschweißt wird, wobei im Kontaktbereich (B) das Ende der Strebe (5) mit der ersten Kunststoffhalbschale (2) verschweißt wird,
**dadurch gekennzeichnet, dass** das Anbauteil (4) eine Kraftstoffpumpe, ein Fördermodul oder ein Hebelgeber ist.

2. Verfahren nach Anspruch 1,
**dadurch gekennzeichnet, dass** die erste Kunststoffhalbschale (2) und die zweite Kunststoffhalbschale (3) durch Erwärmen und Thermoformen geformt werden.

3. Verfahren nach zumindest einem der vorhergehenden Ansprüche,
**dadurch gekennzeichnet, dass** die erste Kunststoffhalbschale (2) und die zweiten Kunststoffhalbschale (3) an deren umlaufenden Rändern (6) verschweißt werden, insbesondere thermoplastisch verschweißt.

4. Verfahren nach zumindest einem der vorhergehenden Ansprüche,
**dadurch gekennzeichnet, dass** die Strebe (5) mit der ersten Kunststoffhalbschale (2) thermoplastisch verschweißt wird.

5. Verfahren nach zumindest einem der vorhergehenden Ansprüche,
**dadurch gekennzeichnet, dass** die Strebe (5) und die erste Kunststoffhalbschale (2) aus dem selben Material bestehen, insbesondere aus HDPE.

6. Verfahren nach zumindest einem der vorhergehenden Ansprüche,
**dadurch gekennzeichnet, dass** ein zweites Anbauteil an der zweiten Kunststoffhalbschale (3) dauerhaft befestigt wird.

7. Verfahren nach Anspruch 6,
**dadurch gekennzeichnet, dass** das erste Anbauteil (4) und das zweite Anbauteil mit dem selben Greifwerkzeug an der zweiten Kunststoffhalbschale (3) befestigt werden.

8. Verfahren nach zumindest einem der vorhergehenden Ansprüche,
**dadurch gekennzeichnet, dass** die Strebe (5) eine Sollbruchstelle (7) aufweist, die so ausgelegt ist, dass die Strebe (5) bricht bevor die Kunststoffhalbschalen (2, 3) beschädigt werden.

9. Verfahren nach Anspruch 8,
**dadurch gekennzeichnet, dass** die Sollbruchstelle (7) so ausgelegt ist, dass ein Sitz des ersten Anbauteils (4) an der ersten Kunststoffhalbschale (2) auch dann gegeben ist, wenn die Strebe (5) an der Sollbruchstelle (7) bricht.

## Claims

1. Method for producing a plastic container (1) from a first plastic half-shell (2) and a second plastic half-shell (3), with a first attachment (4) permanently fastened to the first plastic half-shell (2),
wherein
- the first plastic half-shell (2) and the second plastic half-shell (3) are moulded,
- the first attachment (4) is fastened at least for a time to the second plastic half-shell (3), the first attachment (4) having a strut (5), the strut (5) being formed such that one end of the strut (5) lies in a contact region (B) that is intended for contact with the first plastic half-shell (2),
- the first plastic half-shell (2) is welded to the second plastic half-shell (3), the end of the strut (5) being welded to the first plastic half-shell (2) in the contact region (B),
**characterized in that** the attachment (4) is a fuel pump, a feed module or a lever-type sensor.

2. Method according to Claim 1,
**characterized in that** the first plastic half-shell (2) and the second plastic half-shell (3) are moulded by heating and thermoforming.

3. Method according to at least one of the preceding claims,
**characterized in that** the first plastic half-shell (2) and the second plastic half-shell (3) are welded, in particular thermoplastically welded, at their peripheral edges (6).

4. Method according to at least one of the preceding claims,
**characterized in that** the strut (5) is thermoplastically welded to the first plastic half-shell (2).

5. Method according to at least one of the preceding claims,
**characterized in that** the strut (5) and the first plastic half-shell (2) consist of the same material, in particular of HDPE.

6. Method according to at least one of the preceding claims,
**characterized in that** a second attachment is permanently fastened to the second plastic half-shell (3).

7. Method according to Claim 6,
**characterized in that** the first attachment (4) and the second attachment are fastened to the second plastic half-shell (3) with the same gripping tool.

8. Method according to at least one of the preceding claims,
**characterized in that** the strut (5) has a predetermined breaking point (7), which is designed such that the strut (5) breaks before the plastic half-shells (2, 3) are damaged.

9. Method according to Claim 8,
**characterized in that** the predetermined breaking point (7) is designed such that there is a seating of the first attachment (4) on the first plastic half-shell (2) even if the strut (5) breaks at the predetermined breaking point (7).

## Revendications

1. Procédé de fabrication d'un récipient en matière plastique (1) à partir d'une première demi-coquille en matière plastique (2) et d'une deuxième demi-coquille en matière plastique (3), avec une première pièce ajoutée (4) fixée durablement à la première demi-coquille en matière plastique (2), dans lequel
- on moule la première demi-coquille en matière plastique (2) et la deuxième demi-coquille en matière plastique (3),
- on fixe la première pièce ajoutée (4) au moins provisoirement à la deuxième demi-coquille en matière plastique (3), dans lequel la première pièce ajoutée (4) présente une entretoise (5), dans lequel l'entretoise (5) est réalisée de telle manière qu'une extrémité de l'entretoise (5) se situe dans une zone de contact (B), qui est prévue pour le contact avec la première demi-coquille en matière plastique (2),
- on soude la première demi-coquille en plastique (2) à la deuxième demi-coquille en matière plastique (3), dans lequel on soude dans la zone de contact (B) l'extrémité de l'entretoise (5) à la première demi-coquille en matière plastique (2),
**caractérisé en ce que** la pièce ajoutée (4) est une pompe à carburant, un module de transport ou un capteur à levier.

2. Procédé selon la revendication 1, **caractérisé en ce que** l'on moule la première demi-coquille en matière plastique (2) et la deuxième demi-coquille en matière plastique (3) par chauffage et thermoformage.

3. Procédé selon au moins une des revendications précédentes, **caractérisé en ce que** l'on soude la première demi-coquille en matière plastique (2) et la deuxième demi-coquille en matière plastique (3) sur leurs bords périphériques (6), en particulier on les soude de façon thermoplastique.

4. Procédé selon au moins une des revendications précédentes, **caractérisé en ce que** l'on soude de façon thermoplastique l'entretoise (5) à la première demi-coquille en matière plastique (2).

5. Procédé selon au moins une des revendications précédentes, **caractérisé en ce que** l'entretoise (5) et la première demi-coquille en matière plastique (2) se composent du même matériau, en particulier de HDPE.

6. Procédé selon au moins une des revendications précédentes, **caractérisé en ce que** l'on fixe durablement une deuxième pièce ajoutée à la deuxième demi-coquille en matière plastique (3).

7. Procédé selon la revendication 6, **caractérisé en ce que** l'on fixe la première pièce ajoutée (4) et la deuxième pièce ajoutée avec le même outil de saisie à la deuxième demi-coquille en matière plastique (3).

8. Procédé selon au moins une des revendications précédentes, **caractérisé en ce que** l'entretoise (5) présente un point destiné à la rupture (7), qui est conçu de telle manière que l'entretoise (5) se rompe avant que les demi-coquilles en matière plastique (2, 3) soient endommagées.

9. Procédé selon la revendication 8, **caractérisé en ce que** le point destiné à la rupture (7) est conçu de telle manière qu'il existe un siège de la première pièce ajoutée (4) sur la première demi-coquille en matière plastique (2), même lorsque l'entretoise (5) se rompt au point destiné à la rupture (7).
